# EUROPEAN PATENT APPLICATION

(11) **EP 1 619 579 A2**
(43) Date of publication of application: **25.01.2006**
(21) Application number: 05011740.7
(22) Date of filing: 31.05.2005
(51) Int. Cl.: G06F 3/06, G06F 3/08

(54) **Mobile electronic equipment**

(30) Priority: 25.06.2004 JP 2004188027
(71) Applicant: KABUSHIKI KAISHA TOSHIBA, Tokyo 105-8001 (JP)
(72) Inventor: Takahashi, Atsushi c/o Intellectual Property Div., Minato-ku Tokyo 105-8001 (JP)
(74) Representative: Kramer - Barske - Schmidtchen

(57) **Abstract**

In an IC card (2) which receives a command requesting a process of writing data into a data storage memory (24d) configured by a rewritable nonvolatile memory (24) from an external equipment (1), the data is first written into a buffer memory (24c) configured by a rewritable nonvolatile memory (24). When a data writing process into the buffer memory (24c) is completed, the IC card (2) outputs response data indicating completion of the data writing process to the external equipment (1). Further, the IC card (2) writes data which has been written in the buffer memory (24c) into the data storage memory (24d) after the response data is output to the external equipment (1).

## Description

This invention relates to a mobile electronic equipment such as an IC card which has a communication function with respect to an external equipment and in which a process of writing data into a nonvolatile memory is performed according to a command from the external equipment and a control method of the mobile electronic equipment.

Conventionally, in a mobile electronic equipment such as an IC card, various data items are written into a nonvolatile memory. When the nonvolatile memory used in the electronic equipment such as the IC card is operated, data is written into the nonvolatile memory according to a command from an external equipment such as an IC card processing equipment. For example, in the conventional IC card, the process of writing data into the nonvolatile memory is performed according to the following procedure.

First, when the IC card which is supplied with the power supply voltage and clock signal from the external equipment and activated receives a command from the external equipment, it performs a process for the command. Data which is required to be written into the nonvolatile memory according to the processing contents for the command is temporarily written into a buffer area on the nonvolatile memory and then data which is the same as the contents written into the buffer area is written into a data storage area on the nonvolatile memory. Thus, if the process of writing data into the data storage area on the nonvolatile memory is completed, the IC card outputs a status indicating the result of execution of the command and response data corresponding to the command process to the external equipment as the processing result.

In the conventional IC card, data is written into the buffer area and data storage area on the nonvolatile memory in a time period from the time when the IC card receives the command from the external equipment until the processing result is output to the external equipment. That is, in the conventional IC card, data is written twice into the nonvolatile memory after the command is received, and then the processing result for the command is output. Therefore, there occurs a problem that the processing time period from the time when the IC card receives the command until the processing result is output becomes long. Further, if the above processing procedure is performed, there occurs a problem that time required for the command process becomes long in a whole system configured by the external equipment and IC card.

Further, if whole data items are directly stored into a data storage area without using the buffer area in order to reduce the processing time for data writing, there occurs a problem that data before execution of the command or data after execution of the command cannot be ensured when a problem such as interruption of the power supply occurs during the command processing operation (data writing process). Particularly, at the operation time of the IC card, the environment in which the command process is performed is not clearly defined. Therefore, the procedure for ensuring write data becomes important. Thus, in the conventional IC card, whole data items to be written into the data storage area are temporarily stored into the buffer area and then written into the data storage area. As a result, there occurs a problem that the writing process into the nonvolatile memory is performed twice and it takes a long time to process the command from the above-described reason.

An object of this invention is to provide a mobile electronic equipment capable of efficiently perform a process such as a data writing process into a nonvolatile memory and a control method of the mobile electronic equipment.

A mobile electronic equipment according to a first aspect of the present invention comprises a communicating section which performs communication with respect to an external equipment, a data storage memory which stores data, a buffer memory in which data to be stored into the data storage memory is temporarily stored, and a control section which transmits response data indicating completion of a data writing process to the external equipment based on completion of the writing process of writing data which is received from the external equipment via the communicating section and is to be stored in the data storage memory into the buffer memory and then writing data written in the buffer memory into the data storage memory.

A control method of a mobile electronic equipment according to a second aspect of the present invention comprises receiving data from an external equipment, writing data to be stored in a data storage memory into a buffer memory based on the data received from the external equipment, transmitting response data indicating completion of a data writing process to the external equipment based on completion of the writing process of writing data into the buffer memory, and writing data written in the buffer memory into the data storage memory after the response data is transmitted to the external equipment.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram schematically showing an example of the configuration of an IC card as a mobile electronic equipment according to one embodiment of this invention and an IC card processing equipment as an external equipment which communicates with the IC card;
FIG. 2 is a diagram time-sequentially showing the processes of the IC card processing equipment and IC card;
FIGS. 3A and 3B are flowcharts for illustrating the processing procedure of a command process; and
FIG. 4 is a flowchart for illustrating the processing procedure when the IC card is activated.

There will now be described the best mode of one embodiment of this invention in detail with reference to the accompanying drawings.

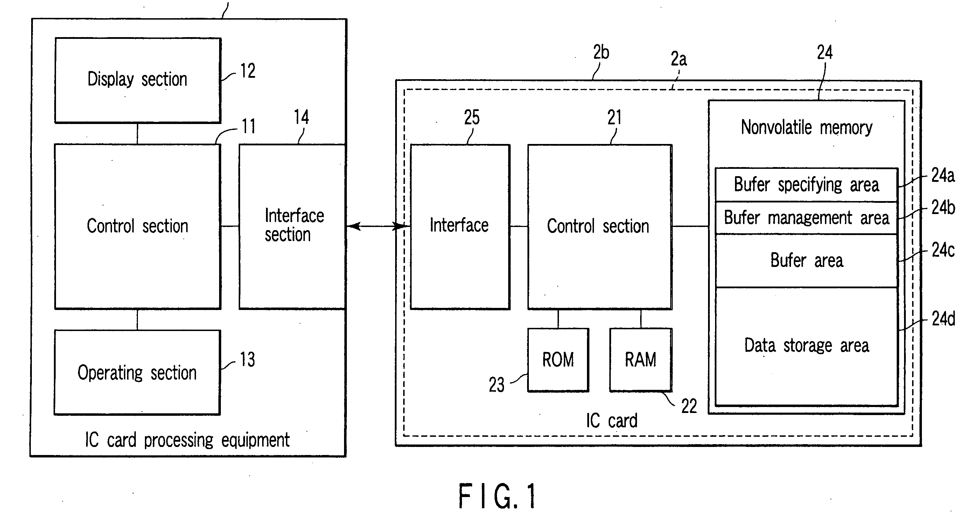

FIG. 1 is a block diagram schematically showing an example of the configuration of an IC card 2 as a mobile electronic equipment according to one embodiment of this invention and an IC card processing equipment 1 as an external equipment which communicates with the IC card 2.

The IC card processing equipment 1 is a terminal equipment as a host unit (external equipment) which communicates with the IC card 2. For example, when data is written into the IC card 2, the IC card processing equipment 1 transmits a write command containing a write request and writes data to the IC card 2 and receives a response for the write command from the IC card 2.

The IC card processing equipment 1 includes a control section 11, display section 12, operating section 13 and interface section 14. For example, the IC card processing equipment 1 is configured by a PC including the control section 11, display section 12 and operating section 13 and the interface section 14 used as a reader/writer device connected to the PC.

The control section 11 is configured by a CPU, various memories and the like. The control section 11 has a function of controlling a command to be transmitted/received with respect to the IC card 2 by controlling various sections in the IC card 2 and a function of performing various processes based on data received from the IC card 2.

The display section 12 is configured by a display device. The display section 12 displays various data items based on display control by the control section 11. The operating section 13 is configured by a keyboard or the like. The operating section 13 is supplied with various operating instructions and data items by an operator, for example. The interface section 14 is an interface device with respect to the IC card 2. For example, the interface section 14 supplies power supply voltage and a clock signal to the IC card 2 and performs reset control and data transmission/reception with respect to the IC card 2.

Further, as shown in FIG. 1, the IC card 2 includes a control section 21, RAN 22, ROM 23, nonvolatile memory 24 and interface 25. The IC card 2 is configured by embedding a module 2a in a casing 2b. That is, the control section 21, RAN 22, ROM 23, nonvolatile memory 24 and interface 25 are configured as the module 2a. The module 2a is embedded in the casing 2b of the IC card 2. For example, the module 2a is configured by one IC chip or a plurality of IC chips (not shown).

The control section 21 controls the whole portion of the IC card 2. The control section 21 is operated based on a control program stored in the ROM 23 or nonvolatile memory 24. The RAM 24 is a volatile memory functioning as a working memory. The RAM 22 functions as a buffer which temporarily stores data now processed by the control section 21. For example, the RAM 22 temporarily stores data received from the IC card processing equipment 1 via the interface 25.

The ROM 23 is a nonvolatile memory in which a control program and control data are previously stored. The ROM 23 is incorporated in the IC card 2 at the manufacturing stage. The control program stored in the ROM 23 is previously incorporated according to the specification of the IC card 2.

For example, the nonvolatile memory 24 is configured by a data writable and rewritable nonvolatile memory such as a flash ROM or EEPROM. In the nonvolatile memory 24, a program file and data file are defined according to the application of the IC card 2 and data is written into the files.

Further, in the nonvolatile memory 24, a buffer specifying area 24a, buffer management area 24b, buffer area 24c and data storage area 24d are provided. The buffer specifying area 24a, buffer management area 24b, buffer area 24c and data storage area 24d are memory areas mainly used when the IC card 2 is operated.

In the buffer specifying area 24a, information indicating data which is required to be stored in the data storage area 24d after the data is temporarily stored in the buffer area 24c. That is, it is checked whether or not data to be stored in the data storage area 24d of the nonvolatile memory 24 is required to be temporarily written into the buffer area 24c and then written into the data storage area 24d by referring to information stored in the buffer specifying area 24a.

In the buffer management area 24b, information indicating the range of a buffer area now used is stored. When data is written into the buffer area 24c, information indicating the range of the data is written into the buffer management area 24b. Further, data in the range indicated by the information written in the buffer management area 24b is initialized (erased) when the data is written into the data storage area 24d. That is, whether the range of the buffer area is now used or not is determined based on information stored in the buffer management area 24b.

The buffer area 24c is an area in which data to be stored in a preset area of the data storage area 24d is temporarily stored.

The data storage area 24d is an area into which data is written based on a request from the IC card processing equipment 1. That is, when a data write command is received from the IC card processing equipment 1, data to be written according to the write command is temporarily written into the buffer area 24c and is then written into a specified position of the data storage area 24b.

The interface 25 is a communication interface which communicates with a host unit such as the IC card processing equipment 1. The interface 25 transmits or receives data with respect to the host unit via a contact portion, antenna or the like (not shown) provided on the IC card main body.

Further, the IC card 2 is activated (set into an operable state) when it is supplied with electric power from the host unit such as the IC card processing equipment 1. For example, when the IC card 2 is electrically connected to the IC card processing equipment 1 via a contact type communication system, that is, when the IC card is configured by a contact type IC card, the IC card 2 is activated by receiving operation power supply voltage and operation clock signal from the IC card processing equipment 1 via a contact portion used as the interface 25.

Further, when the IC card 2 is electrically connected to the IC card processing equipment 1 via a non-contact type communication system, that is, when the IC card 2 is configured by a non-contact type IC card, the IC card 2 is activated by receiving radio waves from the IC card processing equipment 1 via an antenna and communication control section used as the interface 25 and generating operation power supply voltage and operation clock signal based on the radio waves by use of a power supply portion (not shown).

Next, the processes of the IC card processing equipment 1 and IC card 2 are schematically explained.

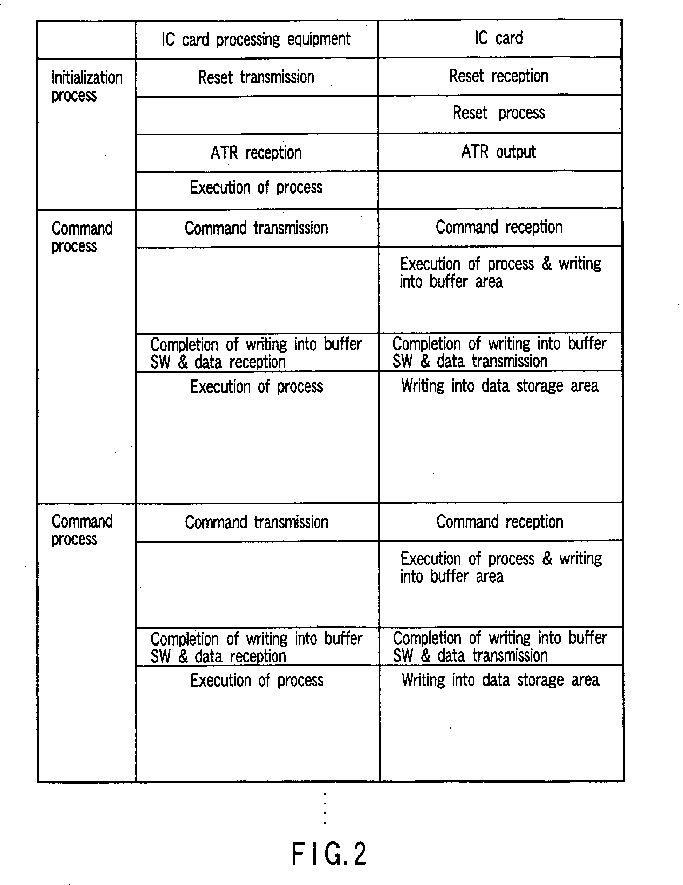

FIG. 2 is a diagram time-sequentially showing the processes of the IC card processing equipment 1 and IC card 2.

First, the IC card processing equipment 1 performs the initialization process to activate the IC card 2 and set the IC card 2 into a communicable state. That is, when the interface section 14 of the IC card processing equipment 1 is connected to the interface 25 of the IC card 2, the IC card processing equipment 1 supplies power supply voltage and clock signal to the IC card 2. When the IC card processing equipment 1 and IC card 2 are set into the communicable state, the IC card processing equipment 1 supplies a reset signal to the IC card 2.

On the other hand, when the IC card 2 receives a reset signal from the IC card processing equipment 1, it performs the reset process based on the reset signal received from the IC card processing equipment 1. When the reset process based on the reset signal is terminated, the IC card 2 transmits an ATR signal to the IC card processing equipment 1.

The IC card processing equipment 1 which has received the ATR signal from the IC card 2 performs a preset process at the triggering time. When the IC card 2 is reset by the initialization process as described above, the IC card processing equipment 1 and IC card 2 are set into a state in which a command can be transmitted/received and the process can be performed based on the command. In this state, the command process is performed by use of the IC card processing equipment 1 and IC card 2.

That is, in the command process, the IC card processing equipment 1 transmits command data (for example, a data write request and write data) to the IC card 2. The IC card 2 which has received the command data performs a process for the command and writes the write data into the buffer area 24c.

When the process of writing the write data into the buffer area 24c in the command process is completed, the IC card 2 transmits data (response data) indicating the processing result such as a status indicating completion of the write process into the buffer area 24c to the IC card processing equipment 1. In the IC card 2 which has transmitted the status, a process of writing data which has been written in the buffer area 24c into a specified area of the data storage area 24d is performed.

As response data indicating completion of the write process into the buffer area 24c, a status indicating completion of a normal write process can be used. As will be described later, this is because the process of writing data written in the buffer area 24c into the data storage area 24d is completed only within the IC card 2. That is, even when the IC card processing equipment 1 receives a status indicating completion of the normal write process from the IC card 2 at the time of completion of writing into the buffer area 24c, the normal operation can be maintained in the whole system.

In the IC card processing equipment 1 which has received data (response data) indicating the processing result such as a status indicating completion of writing (or a status indicating completion of the normal write process) into the buffer area 24c from the IC card 2, the process based on the response data is performed.

According to the above command process, the process of writing data into the data storage area 24d in the IC card 2 is performed in parallel with the process based on response data in the IC card processing equipment 1. As a result, time for a process of transmitting/receiving data between the IC card processing equipment 1 and the IC card 2 can be reduced in a whole process. In other words, the process of writing data into the data storage area 24d in the IC card 2 is performed while the IC card processing equipment 1 is performing a process based on response data. Thus, time required for the IC card 2 to perform a process of writing data into the data storage area 24d can be reduced in a whole process.

Next, the processing procedure of the above command process is explained in detail.

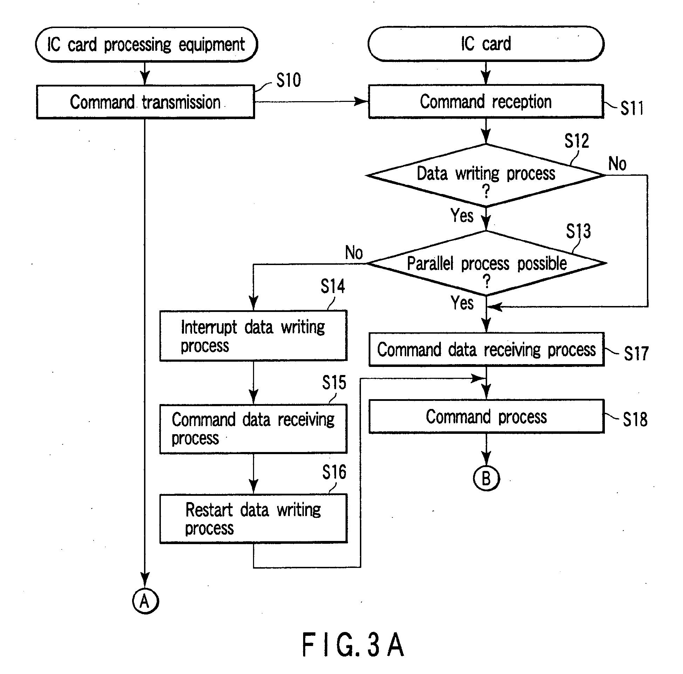

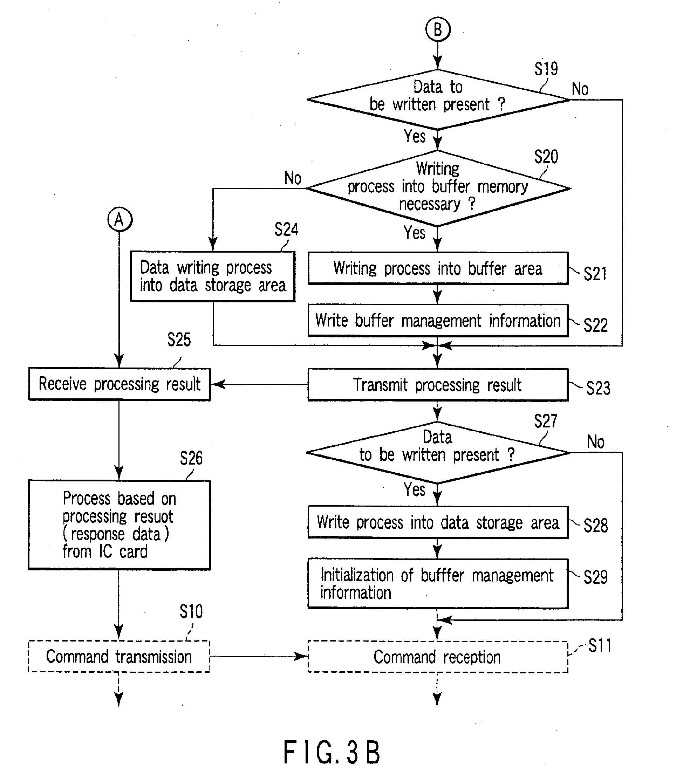

FIGS. 3A and 3B are flowcharts for illustrating the processing procedure of the command process.

First, it is assumed that the IC card processing equipment 1 transmits command data (command) to the IC card 2 via the interface section 14 (step S10). When receiving the command data from the IC card processing equipment 1 (step S11), the control section 21 of the IC card 2 determines whether the process of writing data into the data storage area 24d is now performed or not (step S12). In this case, the data writing process is a process of writing data into the data storage area 24d based on the command data received in the preceding cycle.

If it is determined in the above determining process that the process of writing data into the data storage area 24d is now performed ("YES" in the step S12), the control section 21 of the IC card 2 determines whether or not the command data receiving process can be performed in parallel with the data writing process which is now performed with respect to the data storage area 24d (step S13).

If it is determined in the above determining process that the parallel process cannot be performed ("NO" in the step S13), the control section 21 of the IC card 2 interrupts the data writing process which is now performed with respect to the data storage area 24d (step S14). The data writing process with respect to the data storage area 24d is a process of writing data written in the buffer area 24c used as a nonvolatile memory as will be described later into the data storage area 24d. Therefore, in the present embodiment, the data writing process can be temporarily interrupted and another process can be first performed.

If the data writing process which is now performed with respect to the data storage area 24d is interrupted, the control section 21 of the IC card 2 performs a receiving process of receiving command data from the IC card processing equipment 1 via the interface 25 (step S15). In the receiving process, the control section 21 of the IC card 2 receives the command data from the IC card processing equipment 1 via the interface 25. When receiving the command data from the IC card processing equipment 1, the control section 21 of the IC card 2 temporarily fetches the received command data into the RAM 22.

When the receiving process of the command data from the IC card processing equipment 1 is completed, the control section 21 of the IC card 2 restarts the data writing process which has been interrupted with respect to the data storage area 24d (step S16). When the data writing process is completed, the control section 21 of the IC card 2 proceeds the process to the step S18 and performs a command process based on the command data received in the step S15 (step S18).

If it is determined in the above determining process that the data writing process with respect to the data storage area 24d is not being performed ("NO" in the step S12) or if it is determined in the above determining process that the parallel process (the parallel process of the data writing process into the data storage area 24d and the command data receiving process) can be performed ("YES" in the step S13), the control section 21 of the IC card 2 performs a receiving process of receiving command data from the IC card processing equipment 1 via the interface 25 (step S17). In the receiving process, the control section 21 of the IC card 2 receives command data from the IC card processing equipment 1 via the interface 25. When receiving command data from the IC card processing equipment 1, the control section 21 of the IC card 2 temporarily fetches the received command data into the RAM 22.

When the data writing process is completed in the step S16 or when the receiving process of command data from the IC card processing equipment 1 is completed in the step S17, the control section 21 of the IC card 2 performs a command process based on the command data (step S18). The control section 21 of the IC card 2 determines whether or not data to be written into the data storage area 24d of the nonvolatile memory 24 is present based on the processing result of the command process (step S19).

If it is determined in the above determining process that data to be written into the data storage area 24d is present ("YES" in the step S19), the control section 21 of the IC card 2 determines whether or not it is necessary to write the data via the buffer area 24c based on a write area of the data (an address indicating the write position in the data storage area) and information indicating a specified area and stored in the buffer specifying area 24a (step S20).

In the buffer specifying area 24a, data which is required to be temporarily stored in the buffer area 24c and then written into the data storage area 24d is stored as information indicating an area (specified area) in the data storage area 24d. That is, in the data storage area 24d, various data items are stored in preset areas.

Data to be stored in the data storage area 24d contains data which prevents the IC card from being correctly operated when correct data is not written by an error caused by disconnection of the power supply or the like during the data writing process. Such data is temporarily written into the buffer area 24c and then written into the data storage area 24d. As a result, even when an error occurs during the data writing process, data to be written into the data storage area 24d can be restored to correct data by use of data stored in the buffer area 24c.

Therefore, in the buffer specifying area 24a, data to be written into the data storage area 24d via the buffer area 24c is stored as information (address information) indicating an area in the data storage area.

If it is determined in the above determining process that data is required to be temporarily written into the buffer area 24c ("YES" in the step S20), the control section 21 of the IC card 2 performs a data writing process of writing the data into the buffer area 24c (step S21). When the data writing process of writing data into the buffer area 24c is completed, the control section 21 of the IC card 2 stores information indicating an area (write range) in the buffer area 24c in which the data has been written, information indicating a write area in the data storage area 24d in which the data is to be written or the like as buffer management information into the buffer management area 24b (step S22).

In this case, when the data writing process into the buffer area 24c is completed, the control section 21 of the IC card 2 transmits a status indicating completion of the writing process into the buffer area 24c and data (response data) obtained by the command process as the processing result to the IC card processing equipment 1 via the interface 25 (step S23).

Further, if it is determined in the above determining process that data to be written into the data storage area 24d is not required to be temporarily written into the buffer area 24c ("NO" in the step S20), that is, if it is determined that the data can be directly written into the data storage area 24d without writing the data into the buffer area 24c, the control section 21 of the IC card 2 performs a data writing process of directly writing the data into a preset area of the data storage area 24d (step S24).

In this case, when the process of directly writing data into the data storage area 24d is completed, the control section 21 of the IC card 2 transmits a status indicating the result of execution of the command and data (response data) obtained by the command process as the processing result to the IC card processing equipment 1 via the interface 25 (step S23).

If it is determined that data to be written into the data storage area 24d is no more present by the command process ("NO" in the step S19), the control section 21 of the IC card 2 transmits a status indicating the result of execution of the command and data (response data) obtained by the command process as the processing result to the IC card processing equipment 1 via the interface 25 (step S23).

With respect to the IC card 2 which performs the above operation, the IC card processing equipment 1 receives the processing result for the command from the IC card 2 via the interface section 14 (step S25). When the processing result (response data) for the command from the IC card 2 is received, the control section 11 of the IC card processing equipment 1 performs various processes based on response data as the processing result for the command from the IC card 2 (step S26).

When transmitting the processing result (response data) for the command, the control section 21 of the IC card 2 determines whether or not data written into the buffer area 24c is present based on information stored in the buffer management area 24b (step S27). If it is determined in the above determining process that data written into the buffer area 24c is present, the control section 21 of the IC card 2 performs a process of writing data stored in the buffer area 24c into a preset area of the data storage area 24d which is a normal storage area based on information stored in the buffer management area 24b (step S28).

That is, when data to be written into the data storage area 24d is stored in the buffer area 24c, the control section 21 of the IC card 2 transmits a status indicating completion of the writing process into the buffer area 24c and data obtained by the command process as the processing result to the IC card processing equipment 1 and then performs a write process of writing data which has been written in the buffer area 24c into the data storage area 24d (step S28).

Further, when the process of writing data which has been written in the buffer area 24c into the data storage area 24d is completed, the control section 21 of the IC card 2 initializes (erases) buffer management information for the data stored in the buffer management area 24b (step S29).

According to the above process, the IC card 2 transmits response data indicating completion of the command process to the IC card processing equipment 1 when the process of writing data into the buffer area 24c is completed. Further, the IC card 2 writes data which has been written in the buffer area 24c into the data storage area 24d after the IC card processing equipment 1 has performed a process for response data and before it receives a next command. As a result, a process based on response data from the IC card 2 in the IC card processing equipment 1 and a process of writing data into the data storage area 24d in the IC card 2 can be performed in parallel and the operation speed of the process for the command can be enhanced and the process can be efficiently performed in a whole system.

The processing time of the process based on the processing result for the command of the IC card in the IC card processing equipment becomes longer in comparison with that of the data writing process into the nonvolatile memory in the IC card in many cases. For example, if the processing time for the process of the IC card processing equipment for response data from the IC card is longer than the processing time for the data writing process into the data storage area in the IC card, time required for the data writing process into the data storage area in the IC card can be reduced as the processing time of the whole system. Thus, in the present embodiment, the data writing process into the data storage area 24d in the IC card 2 and the process in the IC card processing equipment 1 are performed in parallel. As a result, the processing time of the command process can be reduced in the whole system configured by the IC card 2 and the IC card processing equipment 1 and the command process can be efficiently performed.

Next, the operation performed when the IC card 2 is activated is explained.

As described above, the IC card 2 is activated by receiving the power supply voltage from a host unit such as the IC card processing equipment 1. Therefore, when the power supply is cut off or interrupted during the command process as explained with reference to FIGS. 3A and 3B, that is, when supply of the power supply voltage from the IC card processing equipment 1 is interrupted during the process, the state of data by the command process now executed can be set to various states in the nonvolatile memory 24 of the IC card 2.

For example, when the power supply is interrupted in a state in which the write process into the buffer area 24c is not yet completed, a state in which data obtained after the command process is stored in neither the buffer area 24c nor the data storage area 24d is set in the IC card 2. Further, when the writing process into the buffer area 24c is completed and the writing process into the data storage area 24d is not completed, a state in which data obtained after the command process is stored in the buffer area 24c and the data is not stored in the data storage area 24d is set in the IC card 2.

In order to cope with interruption of the power supply during the command process, a process for the data state of the nonvolatile memory 24 is performed in the IC card 2 when it is activated (triggered). Next, the process performed when the IC card 2 is activated is explained.

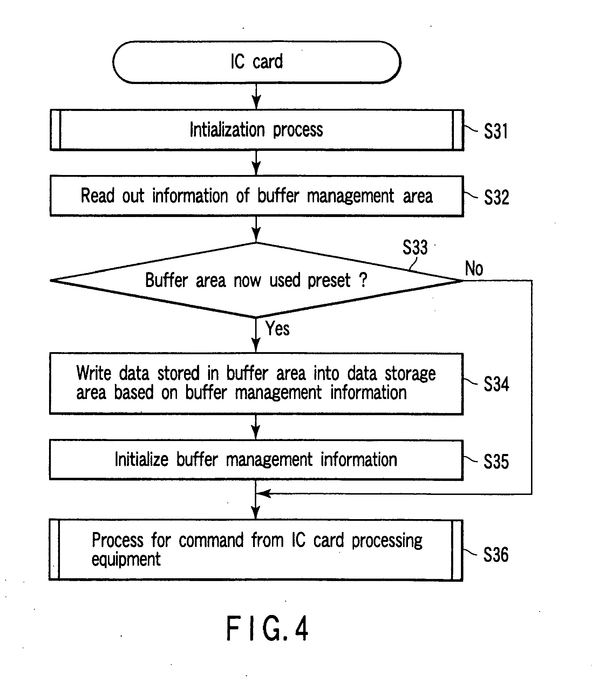

FIG. 4 is a flowchart for illustrating the processing procedure when the IC card 2 is activated.

That is, when the IC card processing equipment 1 and the IC card 2 are connected to each other via the interfaces thereof, the initialization process described above is performed (step S31). The IC card 2 is activated (triggered) by the initialization process. The control section 21 of the thus activated IC card 2 first reads out buffer management information stored in the buffer management area 24b (step S32). Thus, the control section 21 of the IC card 2 determines whether or not a buffer area which is now used is present according to whether or not buffer management information is stored in the buffer management area 24b (step S33). In the above determining process, whether or not data which is not completely written into the data storage area 24d is present in the buffer area 24c is determined according to the presence or absence of buffer management information in the buffer management area 24b.

If it is determined in the above determination process that the buffer area 24c which is now used is present ("YES" in the step S33), the control section 21 of the IC card 2 performs the process of writing data stored in the buffer area 24c into the data storage area 24d based on buffer management information stored in the buffer management area 24b (step S34).

That is, the control section 21 of the IC card 2 determines the range (area) of data written in the buffer area 24c based on buffer management information stored in the buffer management area 24b. If the range (area) of data written in the buffer area 24c is determined in the above determining process, the control section 21 of the IC card 2 performs a process of writing data written in the above range into a specified area of the data storage area 24d.

When the process of writing data written in the buffer area 24c into the specified area of the data storage area 24d is completed, the control section 21 of the IC card 2 initializes (erases) the buffer management information of the buffer management area 24b (step S35). As a result, the IC card 2 is set into a state in which a normal command process can be performed (step S36).

According to the above process, when the power supply is interrupted in a state in which data is written only in the buffer area 24c in a preceding cycle (for example, when the power supply is interrupted during the writing process of writing data in the buffer area 24c into the data storage area 24d), the IC card 2 can write data written in the buffer area 24c into a normal area of the data storage area 24d when it is reactivated. As a result, next and succeeding command processes can be performed in the IC card 2 in a state in which data caused by the preceding command process is written in the data storage area 24d.

When the power supply is interrupted in a state in which normal data is not written in the buffer area 24c in a preceding cycle (for example, when the power supply is interrupted during the writing process into the buffer area 24c), the IC card 2 can perform next and succeeding command processes in a state in which the preceding command process is not performed (in a state in which data caused by the preceding command process is not written). Therefore, by performing the above process, the IC card 2 can be prevented from being operated in a state in which incorrect data is written in the data storage area 24d.

Next, a case wherein an error occurs in the data writing process into the data storage area 24d is explained.

For example, when a problem occurs during the process of writing data into the data storage area 24d, the data is held in the buffer area 24c. Therefore, when interruption of the power supply occurs during the data writing process into the data storage area 24d, normal data stored in the buffer area 24c can be rewritten into the data storage area 24d by the operation explained with reference to FIG. 4 in the IC card 2. However, when normal data cannot be written due to occurrence of a faulty operation of the memory element in the data storage area 24d, a state in which normal data is not written in the data storage area 24d occurs in practice although the IC card processing equipment 1 receives notification indicating completion of the command process.

In the above case, the control section 21 of the IC card 2 performs an error process for an error occurring in the data writing process into the data storage area 24d. As the error process in the above case, for example, the IC card 2 may inform the IC card processing equipment 1 that a write error occurs when receiving a next command generated from the IC card processing equipment 1 after the error has occurred in the writing process into the data storage area 24d. In this case, the IC card 2 informs the IC card processing equipment 1 of occurrence of the write error and then performs the same process as the process for an error occurring in the conventional write process. As a result, the restoring process for occurrence of a write error can be performed in the IC card 2.

As the error process for data written into the data storage area 24d, an area on the buffer area 24c in which the data is written can be used as the normal data storage area 24d. In this case, data to be written into the data storage area 24d is written in a normal state in the buffer area 24c. Therefore, the IC card 2 modifies information which defines the buffer area 24c and data storage area 24d in the nonvolatile memory 24. Thus, an area on the buffer area 24c can be used as the normal data storage area 24d. According to the above process, the IC card 2 can be restored from a state in which a write error occurs even if a physical problem occurs in the data storage area 24d.

As described above, the IC card of this embodiment includes the rewritable nonvolatile memory having the data storage area which stores data and the buffer area which temporarily stores data to be written into the data storage area, the communicating interface with respect to the external equipment and the control section. The control section writes data into the buffer area when the data is written into the data storage area. When the process of writing data into the buffer area is completed, the control section outputs response data indicating completion of the write process into the buffer area to the external equipment. When the response data is output to the external equipment, the control section performs the process of writing data written in the buffer area into the data storage area.

Thus, the process of writing data written in the buffer area into the data storage area can be performed before a next command is received from the external equipment (during the command reception waiting state). As a result, the process of writing data into the data storage area can be performed after response data is output to the external equipment and a period of time from the time when the command is received from the external equipment until the IC card outputs response data (time required for the command process) can be reduced.

Further, when receiving another command from the external equipment during the process of writing data into the data storage area, the IC card interrupts the data writing process into the data storage area, performs the reception process for a command from the external equipment and then restarts the data writing process into the data storage area. The IC card performs the process for the received command after the restarted process of writing data into the data storage area is ended.

As a result, even when a next command is supplied during the data writing process into the data storage area, the IC card can normally perform the data writing process into the data storage area and the command reception process and time required for the process for the command can be reduced.

Further, in the IC card, information indicating data which is required to be temporarily written into the buffer area among data to be written into the data storage area is previously stored in the buffer specifying area. When writing data into the nonvolatile memory, the IC card refers to information stored in the buffer specifying area to determine whether the process of writing data into the buffer area is required or not. The IC card writes data which is determined necessary to be written into the buffer area into the data storage area via the buffer area. Further, the IC card writes data which is determined unnecessary to be written into the buffer area directly into the data storage area without using the buffer area.

Thus, the IC card can suppress an amount of data which is necessary to be written into the buffer area to minimum. As a result, the IC card can reduce the processing time in comparison with a case wherein all of data is temporarily stored in the buffer area and the process for the command can be efficiently performed.

Further, the IC card stores buffer management information for data which has been written in the buffer area and is then written into the data storage area in the buffer management area and initializes the buffer management information after the process of writing the data into the data storage area is completed.

As a result, the IC card can ensure data in the nonvolatile memory even if the IC card is set into the inactive state due to interruption of the power supply during the data writing process into the data storage area.

Further, when the IC card is set into the active state from the inactive state, the IC card refers to the buffer area to determine whether or not data to be written into the data storage area is present based on information in the buffer management area. If it is determined in the above determining process that data to be written into the data storage area is present, the IC card performs the data writing process into the data storage area based on the buffer management information.

Thus, when the IC card is activated, it can write data which has been written in the buffer area and is to be written into the data storage area into the data storage area. As a result, the IC card can ensure data to be written into the data storage area and efficiently perform the process in the IC card.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A mobile electronic equipment (2) **characterized by** comprising:
a communicating section (25) which performs communication with respect to an external equipment (1),
a data storage memory (24d) which stores data,
a buffer memory (24c) in which data to be stored into the data storage memory (24d) is temporarily written, and
a control section (21) which transmits response data indicating completion of a data writing process to the external equipment based on completion of the writing process of writing data which is received from the external equipment (1) via the communicating section (25) and is to be stored in the data storage memory into the buffer memory and then writing data which has been written in the buffer memory (24c) into the data storage memory (24d).

2. The mobile electronic equipment (2) according to claim 1, **characterized by** further comprising a module (2a) containing the communicating section (25), data storage memory (24d), buffer memory (24c) and control section (21), and a casing (2b) having the module (2a) embedded therein.

3. The mobile electronic equipment (2) according to claim 1, **characterized in that** the data storage memory (24d) is a data storage area (24d) provided on a nonvolatile memory in which data is rewritten by the control section and the buffer memory (24c) is a buffer area (24c) provided on the nonvolatile memory.

4. The mobile electronic equipment (2) according to claim 1, **characterized in that** the control section (21) interrupts a data writing process into the data storage memory (24d) when data is received from the external equipment (1) via the communicating section (25) while data is being written into the data storage memory (24d), and restarts the data writing process into the data storage memory (24d) after completion of reception of data from the external equipment (1) via the communicating section (25) in a state in which the data writing process into the data storage memory (24d) is interrupted.

5. The mobile electronic equipment (2) according to claim 4, **characterized in that** the control section (21) performs a process for data received via the communicating section (25) after the restarted data writing process into the data storage memory (24d) is completed.

6. The mobile electronic equipment (2) according to claim 1, **characterized by** further comprising a buffer specifying memory (24a) in which information indicating data required to be written into the buffer memory (24c) among data to be stored in the data storage memory (24d) is stored,
wherein the control section (21) determines whether a process of temporarily writing data received from the external equipment (1) into the buffer memory (24c) is required based on information stored in the buffer specifying memory (24a), and directly writes data which is determined unnecessary to be written into the buffer memory (24c) in the above determining process into the data storage memory (24d).

7. The mobile electronic equipment (2) according to claim 1, **characterized by** further comprising a buffer management memory (24b) which stores management information for data written in the buffer memory (24c),
wherein the control section (21) determines whether data to be stored in the data storage memory (24d) is present in the buffer memory (24c) based on management information stored in the buffer management memory (24b) when the mobile electronic equipment (2) is triggered, and writes data written in the buffer memory (24c) into the data storage memory (24d) based on the management information stored in the buffer management memory (24b) when it is determined in the above determining process that data to be stored in the data storage memory (24d) is present in the buffer memory (24c).

8. The mobile electronic equipment (2) according to claim 7, **characterized in that** the control section (21) initializes management information in the buffer management memory (24b) in response to completion of a data write process into the data storage memory (24d) based on the management information stored in the buffer management memory (24b).

9. A control method of a mobile electronic equipment (2) **characterized by** comprising:
receiving (S11) data from an external equipment (1),
writing (S21) data to be stored in a data storage memory (24d) into a buffer memory (24c) based on data received from the external equipment (1),
transmitting (S23) response data indicating completion of a data writing process to the external equipment (1) based on completion of the writing process of writing data into the buffer memory (24c), and
writing (S28) data written in the buffer memory (24c) into the data storage memory (24d) after the response data is transmitted to the external equipment (1).

10. The control method of the mobile electronic equipment (2) according to claim 9, **characterized by** further comprising interrupting (S14) the data writing process into the data storage memory (24d) when data is received from the external equipment (1) during the data writing process into the data storage memory (24d), and restarting (S15, S16) the data writing process into the data storage memory (24d) after reception of data from the external equipment (1) is completed in a state in which the data writing process into the data storage memory (24d) is interrupted.

11. The control method of the mobile electronic equipment (2) according to claim 10, **characterized by** further comprising performing (S18) a process for data received from the external equipment (1) after the restarted data writing process into the data storage memory (24d) is completed.

12. The control method of the mobile electronic equipment (2) according to claim 9, **characterized by** further comprising determining (S20) whether data received from the external equipment (1) is required to be temporarily written into the buffer memory (24c) based on information indicating data which is required to be written into the buffer memory (24c) among data which is stored in a buffer specifying memory (24a) and is to be stored in the data storage memory (24d), and directly writing (S24) data determined unnecessary to be written into the buffer memory (24c) in the above determining process into the data storage memory (24d).

13. The control method of the mobile electronic equipment (2) according to claim 9, **characterized by** further comprising determining (S33) whether data to be stored in the data storage memory (24d) is present in the buffer memory (24c) based on management information for data written in the buffer memory (24c) and stored in a buffer management memory (24b) when the mobile electronic equipment (2) is triggered, and writing (S34) data written in the buffer memory (24c) into the data storage memory (24d) based on the management information stored in the buffer management memory (24b) when it is determined in the above determining process that data to be stored in the data storage memory (24d) is present in the buffer memory (24c).

14. The control method of the mobile electronic equipment (2) according to claim 13, **characterized by** further comprising initializing (S35) management information in the buffer management memory (24b) in response to completion of a process of writing data into the data storage memory (24d) based on the management information stored in the buffer management memory (24b).
